(19) **Europäisches Patentamt / European Patent Office / Office européen des brevets**

(11) **EP 3 428 486 B1**

(12) # EUROPEAN PATENT SPECIFICATION

(45) Date of publication and mention
of the grant of the patent:
**23.12.2020 Bulletin 2020/52**

(21) Application number: **17763592.7**

(22) Date of filing: **09.03.2017**

(51) Int Cl.:
*F16J 9/26* (2006.01)   *F16J 9/12* (2006.01)
*B22D 17/00* (2006.01)   *C21D 5/00* (2006.01)
*C21D 8/00* (2006.01)   *C21D 9/40* (2006.01)
*C21D 1/09* (2006.01)   *C22C 37/00* (2006.01)
*C22C 37/10* (2006.01)   *B22D 17/20* (2006.01)
*C22C 37/08* (2006.01)

(86) International application number:
**PCT/KR2017/002573**

(87) International publication number:
**WO 2017/155331 (14.09.2017 Gazette 2017/37)**

(54) **ALLOY CAST IRON HAVING IMPROVED WEAR RESISTANCE, AND PISTON RING COMPRISING SAME**

LEGIERUNGSGUSSEISEN MIT VERBESSERTER VERSCHLEISSFESTIGKEIT UND KOLBENRING DAMIT

FONTE D'ALLIAGE DE RÉSISTANCE À L'USURE AMÉLIORÉE, ET SEGMENT DE PISTON COMPRENANT LADITE FONTE D'ALLIAGE DE RÉSISTANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.03.2016 KR 20160028375**

(43) Date of publication of application:
**16.01.2019 Bulletin 2019/03**

(73) Proprietor: **Samyoung Machinery Co., Ltd.**
**Gongju-si, Chungcheongnam-do**
**32528 (KR)**

(72) Inventor: **HAN, Geum Tai**
**Daejeon 34125 (KR)**

(74) Representative: **Thoma, Michael**
**Lorenz Seidler Gossel**
**Rechtsanwälte Patentanwälte**
**Partnerschaft mbB**
**Widenmayerstraße 23**
**80538 München (DE)**

(56) References cited:
| | |
|---|---|
| WO-A1-94/10354 | CN-A- 86 107 845 |
| DE-A1- 10 309 386 | JP-A- H05 214 482 |
| JP-A- H06 207 240 | JP-A- 2006 206 986 |
| JP-A- 2006 206 986 | JP-A- 2008 050 651 |
| JP-B2- 3 218 625 | JP-B2- 4 953 377 |
| JP-B2- 5 757 755 | KR-A- 20010 093 226 |
| KR-A- 20110 132 233 | US-A- 3 932 228 |
| US-A- 4 247 972 | US-A- 4 247 972 |
| US-A1- 2015 144 230 | US-B1- 6 485 027 |

## Description

[Technical Field]

The present invention relates to an alloy cast iron having improved wear resistance, and a piston ring containing the same, and more particularly, to an alloy cast iron having improved wear resistance, and a piston ring containing the same, inserted into a groove formed in an outer circumference of a piston in order to maintain sealing between the piston and an inner wall of a cylinder and scrape lubricating oil on a wall of the cylinder to prevent the lubricating oil from being introduced into a combustion chamber.

[Background Art]

A cylinder and a piston linearly reciprocating in the cylinder are provided in an engine of a power generator such as an internal combustion engine, and a piston ring for minimizing friction with the cylinder and maintaining sealing is mounted on the piston.

Generally, the piston ring is provided so as to be coupled to an outer peripheral surface of the piston reciprocating in the cylinder and reciprocate along an inner wall of a cylinder liner, and since the piston ring is exposed to a high temperature and a high pressure and thus, significant thermal and mechanical loads are applied thereto, the piston ring should have excellent thermal resistance and wear resistance.

However, since a piston ring according to the related art does not have sufficient wear resistance and thus the piston ring is worn by friction with the inner wall of the cylinder liner of the engine, combustion gas of the engine may be introduced into a crank-case at a lower portion thereof. When the combustion gas is leaked as described above, there are problems in that a combustion pressure may be decreased, and an engine output may also be decreased by the combustion gas introduced into the crank-case.

In order to solve the above-mentioned problems, a method of preventing a piston ring from being worn by forming a chromium plating layer on an outer peripheral surface of a piston ring to improve wear resistance has been suggested (Korean Patent No. 10-1292978).

However, the piston ring plated with chromium had disadvantages in that since it was difficult to allow the chromium plating layer to be wetted with oil, such that it was impossible to form an oil film, and at the time of applying a high pressure of 200N/mm$^2$ or more, the chromium plating layer was worn, such that it was difficult to use the engine for a long period of time.

Further, in the case of the piston ring plated with chromium, installation and operation of a manufacturing facility for plating chromium have been gradually regulated due to environmental problems, such that it tended to be difficult to perform a chromium plating process.

In addition, environmental foreign materials such as chromium dust, and the like may be generated during a friction process between the chromium plating layer and the cylinder liner when the piston ring reciprocates, and fine chromium particles separated from the chromium plating layer may be discharged to the outside through exhaust gas to cause environmental contamination, and in the case in which the fine chromium particles are mixed with engine oil, disposal of waste engine oil may become difficult. Prior art document JP 3218625 B2 discloses a thin CV graphite cast iron intended to have an increased scuffing resistance and wear resistance, wherein the cast iron has a composition consisting of, by weight ratio, 3.2 to 4.0% C, 1.5 to 2.8% Si, 0.3 to 0.7% Mn, up to 0.05% P, up to 0.015% S, 0.05 to 0.5% Cr, 0.05 to 0.15% V, 0.7 to 1.5% Ni, 0.5 to 3.0% Cu and the balance essentially Fe, wherein it has a structure where compacted vermicular graphite exists in a tempered martensite or bainite matrix. Furthermore, WO 94/10354 A1 describes a gray cast iron, which is used in the manufacture of piston rings and sleeves for internal combustion engines, and which comprises pearlite, eutectic steadite and lamellar graphite. Furthermore, US 6485027 B1 discloses a piston ring of a piston of an internal combustion engine, wherein the piston ring is subject to a selective heat treatment by means of a laser, resulting in a hardened layer of 25-200 micrometers with a hardness of 800-1000 Vickers hardness. Document CN 86107845 A describes a cast iron cylinder sleeve having a surface subject to a laser treatment to increase hardness thereof, wherein the matrix phase has a hardness of 200-300 Vickers hardness versus 900 Vickers hardness for the surface. Furthermore, document US 2015/0144230 A1 discloses a nodular graphite cast iron for a vane of a rotary compressor, said nodular graphite cast iron including 3.4 wt % to 3.9 wt % of carbon, 2.0 wt % to 3.0 wt % of silicon, 0.3 wt % to 1.0 wt % of manganese, 0.1 wt % to 1.0 wt % of chromium, 0.04 wt % to 0.15 wt % of titanium, less than 0.08 wt % of phosphorus, less than 0.025 wt % of sulfur, 0.03 wt % to 0.05 wt % of magnesium, 0.02 wt % to 0.04 wt % of rare earth resource, iron and impurities as the remnants, and includes a bainite matrix structure, nodular graphite and 15 vol % to 35 vol % of carbite.

Therefore, there is a need to develop a piston ring capable of having excellent wear resistance even under a high pressure environment of 200N/mm$^2$ or more and easily forming an oil film on a surface of the piston ring to further prevent the piston ring from being worn.

[Disclosure]

[Technical Problem]

An object of the present invention is to provide an alloy cast iron having improved wear resistance, and a piston ring containing the same.

[Technical Solution]

To achieve this object, the present invention provides for an alloy cast iron as defined by claim 1, a piston ring comprising such alloy cast iron as defined by claim 6 and a method of manufacturing an alloy cast iron as defined by claim 8. Preferred embodiments of the invention are laid down in the dependent claims.

[Advantageous Effects]

Since an alloy cast iron according to the present invention has a structure in which a graphite structure and a steadite-type eutectic structure are precipitated in a pearlite matrix, it is possible to secure ductility from the graphite structure and excellent strength from the steadite-type eutectic structure, such that an alloy cast iron having excellent ductility and wear resistance may be manufactured.

Therefore, at the time of manufacturing a piston ring containing the alloy cast iron, a piston ring having excellent ductility and wear resistance may be manufactured, a process of plating a chromium plating layer on a surface of the piston ring may be omitted, and it is possible to prevent environmental foreign materials such as chromium dust, and the like, from being generated at the time of friction between the chromium plating layer and a cylinder liner.

Further, in the case of a piston ring plated with chromium, performance of an engine is deteriorated by wear of the piston ring within 2 to 3 years, but the piston ring according to the present invention has significantly excellent ductility and wear resistance, such that it is possible to use the piston ring for a long period of time (5 years or more) without deterioration of performance.

[Description of Drawings]

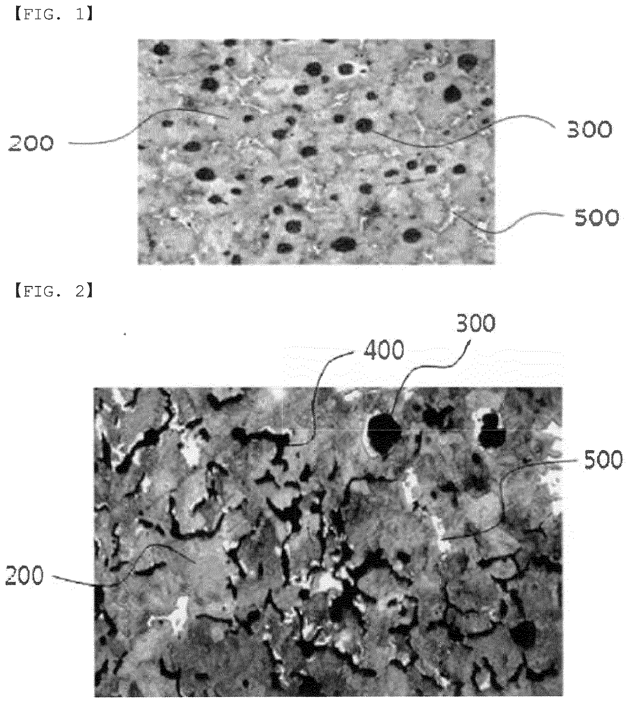

FIG. 1 is a microscope photograph (magnification : 100x) of a cross section of a piston ring manufactured according to an embodiment of the present invention, and FIG. 2 is a microscope photograph (magnification : 200x) of a cross section of a piston ring manufactured according to another embodiment of the present invention. In FIGS. 1 and 2, a black portion is a graphite structure, a white and bright portion is a steadite-type eutectic structure, and the other portion is a pearlite matrix.

[Detailed Description of Main Elements]

200:    Pearlite matrix
300:    Spheroidal graphite structure
400:    Vermicular graphite structure
500:    Steadite-type eutectic structure

[Best Mode]

Hereinafter, an alloy cast iron having improved wear resistance and the piston ring containing the same according to the present invention will be described in more detail with reference to the accompanying drawings. The following accompanying drawings are provided by way of example so that the idea of the present invention can be sufficiently transferred to those skilled in the art to which the present invention pertains. Therefore, the present invention is not limited to the drawings to be provided below, but may be modified in different forms. In addition, the drawings to be provided below may be exaggerated in order to clarify the scope of the present invention. In addition, like reference numerals denote like elements throughout the specification.

Here, technical terms and scientific terms used in the present specification have the general meaning understood by those skilled in the art to which the present invention pertains unless otherwise defined, and a description for the known function and configuration unnecessarily obscuring the gist of the present invention will be omitted in the following description and the accompanying drawings.

According to the related art, there was an attempt to prevent a piston ring from being worn by forming a chromium plating layer on an outer peripheral surface of the piston ring to improve wear resistance, but there was disadvantages in that it was difficult to allow the chromium plating layer to be wetted with oil, such that it was impossible to form an oil film, and at the time of applying a high pressure of 200N/mm$^2$ or more, the chromium plating layer was worn, such that it was difficult to use an engine for a long period of time.

In addition, environmental foreign materials such as chromium dust, and the like, may be generated during a friction process between the chromium plating layer and a cylinder liner when the piston ring reciprocates, and fine chromium particles separated from the chromium plating layer may be discharged to the outside through exhaust gas to cause environmental contamination, and in the case in which the fine chromium particles are mixed with engine oil, disposal of waste engine oil may become difficult.

Therefore, the present inventors suggest a piston ring and an alloy cast iron capable of having excellent wear resistance even under a high pressure environment of 200N/mm$^2$ or more and easily forming an oil film on a surface of the piston ring to further prevent the piston ring from being worn.

More specifically, an alloy cast iron according to an exemplary embodiment of the present invention may include: a pearlite matrix; and a graphitized structure and a steadite-type eutectic structure which are precipitated in the pearlite matrix, wherein the steadite-type eutectic structure includes at least one element selected from boron (B) and vanadium (V), at least one element selected from chromium (Cr) and molybdenum (Mo), and copper (Cu).

Since the alloy cast iron has a structure in which the graphite structure and the steadite-type eutectic structure are precipitated in the pearlite matrix as described above, it is possible to secure excellent ductility from the graphite structure and excellent strength from the steadite-type eutectic structure, such that an alloy cast iron having excellent ductility and wear resistance may be manufactured. Therefore, at the time of manufacturing a piston ring containing the alloy cast iron, a piston ring having excellent ductility and wear resistance may be manufactured, a process of plating a chromium plating layer on a surface of the piston ring may be omitted, and it is possible to prevent environmental foreign materials such as chromium dust, and the like, from being generated at the time of friction between the chromium plating layer and a cylinder liner. Further, in the case of a piston ring plated with chromium, performance of an engine is deteriorated by wear of the piston ring within 2 to 3 years, but the piston ring according to the present invention has significantly excellent ductility and wear resistance, such that it is possible to use the piston ring for a long period of time (5 years or more) without deterioration in performance.

In detail, wear resistance of the alloy cast iron and the piston ring containing the same may be significantly improved by precipitating the steadite-type eutectic structure in the pearlite matrix. In more detail, a substantial factor to impart significantly excellent wear resistance to the alloy cast iron and the piston ring is the steadite-type eutectic structure, and as compared to the pearlite matrix having a micro Vickers hardness (HMV) of about 200 and a standard chromium plating layer coated on a surface of a piston ring, having a micro Vickers hardness (HMV) of about 850, the steadite-type eutectic structure has a significantly high micro Vickers hardness (HMV) of 900 or more, preferably 1000 to 1400, and more preferably 1200 to 1400, such that it is possible to secure significantly excellent wear resistance. That is, although the alloy cast iron according to the present invention uses pearlite having a low hardness as a matrix, as the steadite-type eutectic structure having a significantly excellent hardness is formed between the pearlite matrix, the steadite-type eutectic structure is not worn but withstands during a friction process between the piston ring and an inner wall of the cylinder liner caused by a reciprocation operation of the piston ring, such that it is possible to prevent the alloy cast iron and the piston ring from being worn overall. In this case, the micro Vickers hardness (HMV) is based on a value measured according to American Society for Testing and Materials (ASTM) E384-16, corresponding to a standard test method.

Further, a size and a shape of the steadite-type eutectic structure may be changed depending on casting conditions, and as a non-restrictive and specific example, the steadite-type eutectic structure may have a length of 50 to 100μm in a long axis direction and a width of 5 to 30μm. More preferably, the steadite-type eutectic structure may have a length of 70 to 90μm in a long axis direction and a thickness of 15 to 20μm, but is not necessarily limited thereto.

In addition, it is possible to impart ductility, oil absorption, or the like, to the alloy cast iron and the piston ring by precipitating the graphite structure in the pearlite matrix. More specifically, the graphite structure may include one or two or more selected from a spheroidal graphite structure and a vermicular graphite structure. The spheroidal graphite structure may impart sufficient ductility to the alloy cast iron and piston ring, thereby making it possible to prevent cracks due to laser heat treatment and allow the surface thereof to be uniformly heat-treated. Further, it is possible to prevent damage such as deformation, breakage, or the like, of the piston ring even though the piston ring is used for a long period of time. In the vermicular graphite structure, the term "vermicular" means a shape of a worm, and the vermicular graphite structure has an excellent ability to be wetted with lubricating oil applied between the cylinder liner and the piston ring, such that an oil film may be easily formed on the surface of the piston ring. Therefore, it is possible to prevent the cylinder liner as well as the piston ring from being worn. In addition, the oil film may block a blow-by phenomenon of an engine (a phenomenon that an explosive gas is leaked to thereby be introduced into a crank case), thereby improving efficiency of the engine.

Here, a size and a shape of the graphite structure may be changed depending on casting conditions. As a non-restrictive and specific example, the spheroidal graphite structure may have an average particle diameter of 0.05 to 0.15μm, more preferably, 0.06 to 0.12μm, and the vermicular graphite structure may have a length of 50 to 100μm in a long axis direction and a width of 5 to 30μm, more preferably, a length of 70 to 90μm in the long axis direction and a thickness of 15 to 20μm, but the graphite structure is not necessarily limited thereto.

Meanwhile, in order to secure excellent wear resistance of the alloy cast iron, it is preferable to suitably adjust a cross-sectional area ratio of the pearlite matrix, the graphite structure, and the steadite-type eutectic structure. As a specific example, in a cross-sectional area of the alloy cast iron, a cross-sectional area ratio of the pearlite matrix, the graphite structure, and the steadite-type eutectic structure may be 65 to 85: 10 to 30: 4 to 7, and more preferably, 70 to 80: 15 to 25: 5 to 6. On the contrary, when the cross-sectional area ratio of the steadite-type eutectic structure is less than 4, wear resistance may be deteriorated, and when the cross-sectional area ratio of the steadite-type eutectic structure is more than 7, elongation and elastic force may be deteriorated, such that at the time of applying the alloy cast iron to the piston ring, functions of the piston ring may not be suitably exhibited. That is, the cross-sectional area ratio of the steadite-type eutectic structure satisfies the above-mentioned range, such that excellent ductility and wear resistance may be secured, and a piston ring having excellent performance may be manufactured. Here, the cross-sectional area ratio may mean a ratio occupied by the corresponding structure in a photograph obtained by scanning a cross section of the alloy cast iron using a microscope.

Further, in order to precipitate the steadite-type eutectic structure having a high hardness and the graphite structure in the pearlite matrix, it is preferable to suitably adjust the kinds and contents of metals added at the time of casting. In order to precipitate the steadite-type eutectic structure, the alloy cast iron needs to necessarily include at least one element selected from boron (B) and vanadium (V), at least one element selected from chromium (Cr) and molybdenum (Mo), and copper (Cu) as described above. When the above-mentioned metals are not added, the steadite-type eutectic structure may not be formed.

Preferably, a composition and a content of each ingredient may be differently adjusted depending on a shape of the graphite structure desired to be precipitated. As a specific example, the alloy cast iron including the spheroidal graphite structure may include 0.025 to 0.35 wt% of at least one element selected from boron (B) and vanadium (V), 0.15 to 1 wt% of at least one element selected from chromium (Cr) and molybdenum (Mo), 0.3 to 0.4 wt% of copper (Cu), 0.02 to 0.03 wt% of phosphorus (P), 3.2 to 3.6 wt% of carbon (C), 2.2 to 2.8 wt% of silicon (Si), 0.5 to 0.8 wt% of manganese (Mn), 0.01 to 0.03 wt% of magnesium (Mg), 0.01 wt% or less of sulfur (S), 0.3 to 0.75 wt% of nickel (Ni), and the balance being iron (Fe), based on the total weight of the alloy cast iron. Here, one of boron (B) and vanadium (V) may be added so that a content of boron (B) is 0.025 to 0.045 wt% and a content of vanadium (V) is 0.12 to 0.3 wt%. Alternatively, both boron (B) and vanadium (V) may be added together so that a sum of the contents of boron (B) and vanadium (V) is 0.025 to 0.35 wt%. One of chromium (Cr) and molybdenum (Mo) may be added so that a content of chromium (Cr) is 0.15 to 0.4 wt% and a content of molybdenum (Mo) is 0.25 to 0.5 wt%, or both chromium (Cr) and molybdenum (Mo) may be added together so that a sum of the contents of chromium (Cr) and molybdenum (Mo) is 0.15 to 1 wt%. In the above-mentioned range, the graphite structure may be easily precipitated in a spheroidal phase, such that the alloy cast iron imparted with ductility may be secured.

Alternatively, the alloy cast iron including the vermicular graphite structure may include 0.025 to 0.35 wt% of at least one element selected from boron (B) and vanadium (V), 0.15 to 0.4 wt% of chromium (Cr), 0.7 to 0.8 wt% of copper (Cu), 0.02 to 0.03 wt% of phosphorus (P), 3.4 to 3.8 wt% of carbon (C), 2 to 2.6 wt% of silicon (Si), 0.2 to 1 wt% of manganese (Mn), 0.008 to 0.02 wt% of magnesium (Mg), 0.01 wt% or less of sulfur (S), 0.05 to 0.1 wt% of tin (Sn), and the balance being iron (Fe), based on the total weight of the alloy cast iron. Here, one of boron (B) and vanadium (V) may be added so that a content of boron (B) is 0.025 to 0.045 wt% and a content of vanadium (V) is 0.12 to 0.3 wt%. Alternatively, both boron (B) and vanadium (V) may be added together so that a sum of the contents of boron (B) and vanadium (V) is 0.025 to 0.35 wt%. In the above-mentioned range, the graphite structure may be easily precipitated in a vermicular phase, such that the alloy cast iron imparted with oil absorption may be secured.

Meanwhile, a surface-hardened layer is formed on the alloy cast iron according to the exemplary embodiment of the present invention as described in a method of manufacturing an alloy cast iron to be described below. Here, the term "surface-hardened" means that at the time of performing special treatment on the surface of an alloy cast iron manufactured immediately after a cooling process, a ferrite structure of the pearlite matrix in the surface is partially converted into a cimentite ($Fe_3C$) structure, such that a content of the cimentite structure in the pearlite matrix is increased to exceed a content of the cimentite structure in the pearlite matrix of the alloy cast iron manufactured immediately after the cooling process, and thus hardness is increased. That is, the alloy cast iron subjected to special treatment has a hardness higher than that of an inner layer that is not hardened, and as a non-restrictive and specific example, the alloy cast iron satisfies the following Correlation Equation 1.

[Correlation Equation 1]

$$2 \leq H_S/H_I \leq 10$$

(In Correlation Equation 1, $H_S$ is a micro Vickers hardness (HMV) of the surface-hardened layer of the alloy cast iron, and $H_I$ is a Brinell hardness (HB) of the inner layer of the alloy cast iron.)

Further, the surface-hardened layer means a surface layer of the alloy cast iron of which the surface is hardened. A thickness of the surface-hardened layer is 0.1 to 2mm, preferably, 0.4 to 1mm. Within the above-mentioned range, it is possible to secure a significantly excellent hardness of the alloy cast iron. In addition, the inner layer may mean the other portion of the alloy cast iron except for the surface-hardened layer.

A method of forming the surface-hardened layer is not particularly limited as long as it is generally used in the art. Preferably, the surface-hardened layer may be formed by laser heat treatment or high-frequency heat treatment. More preferably, the surface-hardened layer may be formed by laser heat treatment, and at the time of laser heat treatment, a laser may be irradiated at an output of 1 to 5kW for 1.5 to 15 minutes. In this case, the laser is not particularly limited as long as it is generally used for heat treatment. For example, the laser may be a $CO_2$ laser, a Nd:YAG layer, a diode laser, an excimer laser, or the like, but is not limited thereto.

The alloy cast iron as described above may have tensile strength of 600 to 620N/mm$^2$, yield strength of 450 to 480N/mm$^2$, elongation of 1.5 to 3%, and a micro Vickers hardness (HMV) of 900 to 1400, preferably 1000 to 1400, and more preferably, 1200 to 1400, but is not necessarily limited thereto.

Further, the alloy cast iron according to the present invention does not substantially include a chromium plating layer on the surface thereof. However, the present invention does not exclude introduction of the chromium plating layer for imparting additional effects by the chromium plating layer without departing from the prevent invention.

Further, another aspect of the present invention relates to a piston ring containing the above-mentioned alloy cast iron, that is, a piston ring including: a pearlite matrix; and a graphite structure and a steadite-type eutectic structure which are precipitated in the pearlite matrix, wherein the steadite-type eutectic structure includes at least one element selected from boron (B) and vanadium (V), at least one element selected from chromium (Cr) and molybdenum (Mo), and copper (Cu).

Since contents thereof are the same as those of the alloy cast iron described above, an overlapping description thereof will be omitted.

Further, another general aspect of the present invention relates to an engine including the piston ring described above.

In detail, an engine according to an exemplary embodiment of the present invention may include an engine cylinder, a piston, and a piston ring. More specifically, the engine may include a piston reciprocating upward and downward in an engine cylinder; and a plurality of piston rings provided on a circumferential portion of the piston.

In more detail, the engine may include a piston reciprocating upward and downward in an engine cylinder; and a plurality of piston rings provided on a circumferential portion of the piston, wherein the piston ring includes: a pearlite matrix; and a graphitized structure and a steadite-type eutectic structure which are precipitated in the pearlite matrix, the steadite-type eutectic structure including at least one element selected from boron (B) and vanadium (V), at least one element selected from chromium (Cr) and molybdenum (Mo), and copper (Cu) .

Further, another aspect of the present invention relates to a method of manufacturing an alloy cast iron. The method of manufacturing an alloy cast iron according to an exemplary embodiment of the present invention includes: injecting a molten metal including at least one element selected from boron (B) and vanadium (V), at least one element selected from chromium (Cr) and molybdenum (Mo), copper (Cu), iron (Fe), and carbon (C) into a mold; and cooling the molten metal injected into the mold to manufacture an alloy cast iron in which a graphite structure and a steadite-type eutectic structure are precipitated in a pearlite matrix.

First, a method of preparing the molten metal is not particularly limited as long as it is generally used in the art. More specifically, for example, the molten metal may be prepared by putting raw materials corresponding to materials of a casting into a cupola or electric furnace and applying heat thereto to melt the raw materials. Here, a melting temperature may be changed depending on the kinds and contents of metal to be added, and it is preferable that heat is applied at a temperature equal to or higher than a temperature at which all the raw materials are melted.

Then, the molten metal in which the raw materials are melted may be injected into the mold, and a method of injecting the molten metal into the mold is not particularly limited as long as it is used in a general casting process. Here, preferably, the mold may have a shape of the piston ring, a shape of a pipe having a ringshaped cross section, or the like.

Next, the alloy cast iron in which the graphite structure and the steadite-type eutectic structure are precipitated in the pearlite matrix may be manufactured by cooling the molten metal injected into the mold. Here, it is preferable that the molten metal is slowly cooled. When a cooling rate is excessively fast, precipitation of the steadite-type eutectic structure may be difficult.

Further, the method of manufacturing an alloy cast iron according to the exemplary embodiment of the present invention may further include performing laser heat treatment or high-frequency heat treatment on a surface of the alloy cast iron to harden the surface of the alloy cast iron when the cooling is completed. In a cast iron applied to an existing piston ring, a thickness of the piston ring is excessively thin (about 6mm), it is significantly difficult to harden a surface thereof due to cracks occurring at the time of laser heat treatment or high-frequency heat treatment. However, the alloy cast iron according to the present invention has advantages in that the hardness thereof is increased by the steadite-type eutectic structure and occurrences of the cracks may be prevented due to ductility caused by the graphite structure, preferably, the spheroidal graphite structure, such that it is possible to harden a surface of the piston ring by performing laser heat treatment or high-frequency heat treatment.

A surface-hardened layer is formed on the surface of the alloy cast iron through a surface-hardening process as described above. Here, the term "surface-hardened" means that at the time of performing surface heat treatment such as laser heat treatment or high-frequency heat treatment on the surface of an alloy cast iron manufactured immediately after a cooling process, a ferrite structure of the pearlite matrix in the surface is partially converted into a cimentite ($Fe_3C$) structure, such that a content of the cimentite structure in the pearlite matrix is increased to exceed a content of the cimentite structure in the pearlite matrix of the alloy cast iron manufactured immediately after the cooling process, and thus hardness is increased. That is, the surface of the alloy cast iron hardened by surface heat treatment has a hardness higher than that of an inner layer that is not hardened, and the alloy cast iron satisfies the following Correlation Equation 1.

$$[\text{Correlation Equation 1}]$$

$$2 \leq H_S/H_I \leq 10$$

(In Correlation Equation 1, $H_S$ is a micro Vickers hardness (HMV) of the surface-hardened layer of the alloy cast iron, and $H_I$ is a Brinell hardness (HB) of the inner layer of the alloy cast iron.)

Further, the surface-hardened layer means a surface layer of the alloy cast iron of which the surface is hardened. A thickness of the surface-hardened layer is 0.1 to 2mm, preferably, 0.4 to 1mm. Within the above-mentioned range, it is possible to secure a significantly excellent hardness of the alloy cast iron. In addition, the inner layer may mean the other portion of the alloy cast iron except for the surface-hardened layer.

Preferably, the surface-hardened layer may be formed by laser heat treatment, and at the time of laser heat treatment, a laser may be irradiated at an output of 1 to 5kW for 1.5 to 15 minutes. In this case, the laser is not particularly limited as long as it is generally used for heat treatment. For example, the laser may be a $CO_2$ laser, a Nd:YAG layer, an excimer laser, or the like, but is not limited thereto.

The alloy cast iron having improved wear resistance and the piston ring containing the same according to the present invention will be described in more detail through the following Examples. However, the following Examples are only to specifically explain the present invention, but the present invention is not limited thereto and may be implemented in various forms. In addition, unless defined otherwise in the specification, all the technical and scientific terms used in the specification have the same meanings as those that are generally understood by those who skilled in the art. The terms used in the specification are only to effectively describe a specific Example, but are not to limit the present invention. In addition, unless the context clearly indicates otherwise, it should be understood that a term in singular form used in the specification and the appended claims includes the term in plural form. Further, unless particularly described in the present specification, a unit of additives may be wt%.

**[Example 1]**

After raw materials were melted at 1500°C by middle-frequency induction so that a final content of boron (B) was 0.030 wt%, a final content of chromium (Cr) was 0.39 wt%, a final content of molybdenum (Mo) was 0.0339 wt%, a final content of copper (Cu) was 0.348 wt%, a final content of phosphorus (P) was 0.025 wt%, a final content of carbon (C) was 3.49 wt%, a final content of silicon (Si) was 2.59 wt%, a final content of manganese (Mn) was 0.71 wt%, a final content of magnesium (Mg) was 0.025 wt%, a final content of sulfur (S) was 0.008 wt%, a final content of nickel (Ni) was 0.61 wt%, and the balance was iron (Fe) in an entire weight of a casting, this molten metal was injected into a sand casting mold and cooled to 300°C or less to demold the casting.

Next, after the demolded casting was mechanically processed so as to have a shape of a piston ring, the laser heat treatment was performed on an outer peripheral surface of the casting having the shape of the piston ring using a diode laser having an output of 3.0kW for 10 minutes while rotating the casting.

Through this method, an alloy cast iron in which a spheroidal graphite structure and a steadite-type eutectic structure were precipitated in a pearlite matrix was manufactured.

**[Example 2]**

A casting was prepared by the same method as in Example 1 so that a final content of boron (B) was 0.030 wt%, a final content of chromium (Cr) was 0.39 wt%, a final content of copper (Cu) was 0.73 wt%, a final content of phosphorus (P) was 0.024 wt%, a final content of carbon (C) was 3.61 wt%, a final content of silicon (Si) was 2.24 wt%, a final content of manganese (Mn) was 0.32 wt%, a final content of magnesium (Mg) was 0.011 wt%, a final content of sulfur (S) was 0.007 wt%, a final content of tin (Sn) was 0.083 wt%, and the balance was iron (Fe) in an entire weight of the casting, thereby manufacturing an alloy cast iron in which a vermicular graphite structure and a steadite-type eutectic structure were precipitated in a pearlite matrix.

**[Comparative Example 1]**

A casting was prepared by the same method as in Example 1 so that a final content of copper (Cu) was 0.348 wt%, a final content of phosphorus (P) was 0.025 wt%, a final content of carbon (C) was 3.49 wt%, a final content of silicon (Si) was 2.59 wt%, a final content of manganese (Mn) was 0.71 wt%, a final content of magnesium (Mg) was 0.025 wt%, a final content of sulfur (S) was 0.008 wt%, a final content of nickel (Ni) was 0.61 wt%, and the balance was iron (Fe) in an entire weight of the casting, thereby manufacturing a spheroidal graphite cast iron in which only a spheroidal graphite structure was precipitated in a pearlite matrix.

**[Comparative Example 2]**

A casting was prepared by the same method as in Example 2 so that a final content of copper (Cu) was 0.73 wt%, a final content of phosphorus (P) was 0.024 wt%, a final content of carbon (C) was 3.61 wt%, a final content of silicon (Si) was 2.24 wt%, a final content of manganese (Mn) was 0.32 wt%, a final content of magnesium (Mg) was 0.011 wt%, a final content of sulfur (S) was 0.007 wt%, a final content of tin (Sn) was 0.083 wt%, and the balance was iron (Fe) in an entire weight of the casting, thereby manufacturing a vermicular graphite cast iron in which only a vermicular graphite structure was precipitated in a pearlite matrix.

**[Comparative Example 3]**

After a spheroidal graphite cast iron that is not subjected to laser heat treatment was manufactured by the same method as in Comparative Example 1, a surface of the casting was coated with a chromium plating layer.
Here, the chromium plating layer was formed by dipping the casting into an aqueous solution containing chromic acid anhydride (150g/l) and lactic acid (1.5g/l), raising a temperature of the aqueous solution to 55°C, and performing electroplating thereon at a current density of 40A/dm$^2$ for 4 hours.

**[Measurement of Hardness]**

Hardness of each of the specimens manufactured in Examples 1 and 2 and Comparative Examples 1 and 2 was measured before and after laser heat treatment. Before laser heat treatment (surface treatment), a Brinell hardness (HB) was measured using an iron ball having a size of 100mm and a load of 3000kg according to ASTM E10-12, and after laser heat treatment (surface treatment), a micro Vickers hardness (HMV) was measured using a pyramidal diamond indenter having an angle of 136° and a load of 50kg according to ASTM E384-16. However, in Comparative Example 3, a hardness before forming the chromium plating layer was considered as a hardness before surface treatment, a hardness after forming the chromium plating layer was considered as a hardness after surface treatment, and the hardness in Comparative Example 3 was compared with that in Examples.

[Table 1]

|  | Before Surface Treatment | After Surface Treatment |
|---|---|---|
| Example 1 | 250 HB | 1300 HMV |
| Example 2 | 210 HB | 1250 HMV |
| Comparative Example 1 | 130 HB | 150 HMV |
| Comparative Example 2 | 120 HB | 170 HMV |
| Comparative Example 3 | 130 HB | 850 HMV |

As illustrated in Table 1, it may be confirmed that the piston ring manufactured using the alloy cast irons according to the present invention had significantly excellent hardness as compared to Comparative Examples 1 to 3, and thus, the piston rings had significantly excellent wear resistance.

Further, the piston ring manufactured according to the present invention had tensile strength of 607N/mm$^2$ and yield strength of 466N/mm$^2$, such that tensile strength and yield strength characteristics thereof also were excellent as compared to Comparative Examples 1 to 3. In addition, an elongation of the piston ring manufactured according to the present invention was excellent (2.1%), such that cracks did not occur at the time of laser heat treatment, and it was possible to prevent a shape of the piston ring from being deformed at the time of inserting the piston ring in a circumferential groove of a piston.

On the contrary, in Comparative Examples 1 and 2, hardness was significantly decreased as compared to Examples 1 and 2, and in Comparative Example 3, since the chromium plating layer having an excellent hardness was plated thereon, hardness was excellent, but there was a disadvantage in that it was difficult to allow the chromium plating layer to be wetted with oil, it was impossible to form an oil film, and at the time of applying a high pressure of 200N/mm$^2$ or more, the chromium plating layer was worn, such that it was difficult to use an engine for a long period of time. In addition, there were problems in that environmental foreign materials such as chromium dust, and the like, may be generated during a friction process between the piston ring plated with chromium and a cylinder liner, and fine chromium particles separated from the chromium plating layer may be discharged to the outside through exhaust gas to cause environmental contamination, and in the case in which the fine chromium particles were mixed with engine oil, disposal of waste engine oil may become difficult.

Exemplary embodiments of the present invention were described above, but the present invention may include various changes, modifications, and equivalents. It will be appreciated that the present invention may be similarly applied by modifying the exemplary embodiments. Therefore, the above-mentioned contents are not for limiting the present invention defined by the accompanying claims.

**Claims**

1.   An alloy cast iron comprising:

   a pearlite matrix; and
   **a graphite structure and a steadite-type eutectic structure which are precipitated in the pearlite matrix,**
   wherein the steadite-type eutectic structure includes at least one element selected from boron (B) and vanadium (V), at least one element selected from chromium (Cr) and molybdenum (Mo), and copper (Cu),
   wherein the alloy cast iron comprises **0.02 to 0.5 wt% of** at least one element selected from **boron (B) and vanadium (V),** 0.1 to 1.2 wt% of at least one element selected from chromium (Cr) and molybdenum (Mo), **0.3 to 1 wt% of copper (Cu),** 0.02 to 0.03 wt% of phosphorus (P), 3.2 to 3.8 wt% of carbon (C), 1.8 to 2.8 wt% of silicon (Si), 0.2 to 1 wt% of manganese (Mn), **0.005 to 0.05 wt% of magnesium (Mg),** 0.05 wt% or less of sulfur (S), 0 to 0.75 wt% of nickel (Ni), 0 to 0.1 wt% of tin (Sn), and the balance being iron (Fe), based on a total weight of the alloy cast iron, and
   wherein the graphite structure includes a spheroidal graphite structure **and/or** a vermicular graphite structure, and
   wherein a surface-hardened layer having a thickness of 0.1 to 2mm is formed on the alloy cast iron, and the alloy cast iron satisfies the following Correlation Equation 1:

$$[\text{Correlation Equation 1}]$$
$$2 \leq H_S/H_I \leq 10$$

   (here, $H_S$ is a micro Vickers hardness (HMV) of the surface-hardened layer of the alloy cast iron, and $H_I$ is a Brinell hardness (HB) of an inner layer of the alloy cast iron).

2.   The alloy cast iron of claim 1, wherein in a cross-sectional area of the alloy cast iron, a cross-sectional area ratio of the pearlite matrix, the graphite structure, and the steadite-type eutectic structure is 65 to 85: 10 to 30: 4 to 7.

3.   The alloy cast iron of claim 1, wherein the steadite-type eutectic structure further includes one or two or more selected from phosphorus (P), carbon (C), silicon (Si), manganese (Mn), magnesium (Mg), sulfur (S), nickel (Ni), and tin (Sn).

4.   The alloy cast iron of claim 1, wherein the steadite-type eutectic structure has a length of 50 to 100μm in a long

axis direction and a width of 5< to 30μm.

5. The alloy cast iron of claim 1, wherein the spheroidal graphite structure has an average particle diameter of 0.05 to 0.15μm, and the vermicular graphite structure has a length of 50 to 100μm in a long axis direction and a width of 5 to 30μm.

6. A piston ring comprising the alloy cast iron of any one of claims 1 to 5.

7. An engine comprising the piston ring of claim 6.

8. A method of manufacturing an alloy cast iron, the method comprising:

injecting a molten metal including at least one element selected from boron (B) and vanadium (V), at least one element selected from chromium (Cr) and molybdenum (Mo), copper (Cu), iron (Fe), and carbon (C) into a mold; cooling the molten metal injected into the mold to manufacture an alloy cast iron in which **a graphite structure and a steadite-type eutectic structure are precipitated in a pearlite matrix;** and performing laser heat treatment or high-frequency heat treatment on a surface of the alloy cast iron to harden the surface of the alloy cast iron, wherein the alloy cast iron comprises **0.02 to 0.5 wt% of** at least one element selected from **boron (B) and vanadium (V),** 0.1 to 1.2 wt% of at least one element selected from chromium (Cr) and molybdenum (Mo), **0.3 to 1 wt% of copper (Cu)**, 0.02 to 0.03 wt% of phosphorus (P), 3.2 to 3.8 wt% of carbon (C), 1.8 to 2.8 wt% of silicon (Si), 0.2 to 1 wt% of manganese (Mn), **0.005 to 0.05 wt% of magnesium (Mg)**, 0.05 wt% or less of sulfur (S), 0 to 0.75 wt% of nickel (Ni), 0 to 0.1 wt% of tin (Sn), and the balance being iron (Fe), based on a total weight of the alloy cast iron, wherein the graphite structure includes a spheroidal graphite structure **and/or** a vermicular graphite structure, and wherein a surface-hardened layer having a thickness of 0.1 to 2mm is formed on the alloy cast iron, and the alloy cast iron satisfies the following Correlation Equation 1:

$$[\text{Correlation Equation 1}]$$
$$2 \leq H_S/H_I \leq 10$$

(here, $H_S$ is a micro Vickers hardness (HMV) of the surface-hardened layer of the alloy cast iron, and $H_I$ is a Brinell hardness (HB) of an inner layer of the alloy cast iron).

**Patentansprüche**

1. Legiertes Gusseisen mit:

einer Perlitmatrix; und einer Graphitstruktur sowie einer steatitartigen eutektischen Struktur, die in der Perlitmatrix ausgefällt sind, wobei die steatitartige eutektische Struktur mindestens ein aus Bor (B) und Vanadium (V) ausgewähltes Element, mindestens ein aus Chrom (Cr) und Molybdän (Mo) ausgewähltes Element und Kupfer (Cu) umfasst, wobei das legierte Gusseisen 0,02 bis 0,5 Gew.-% von mindestens einem aus Bor (B) und Vanadium (V) ausgewählten Element, 0,1 bis 1,2 Gew.-% von mindestens einem aus Chrom (Cr) und Molybdän (Mo) ausgewählten Element, 0,3 bis 1 Gew.-% Kupfer (Cu), 0,02 bis 0,03 Gew.-% Phosphor (P), 3,2 bis 3,8 Gew.-% Kohlenstoff (C), 1,8 bis 2,8 Gew.-% Silicium (Si), 0,2 bis 1 Gew.-% Mangan (Mn), 0,005 bis 0,05 Gew.-% Magnesium (Mg), maximal 0,05 Gew.-% Schwefel (S), 0 bis 0,75 Gew.-% Nickel (Ni), 0 bis 0,1 Gew.-% Zinn (Sn) und als Rest Eisen (Fe) umfasst, bezogen auf ein Gesamtgewicht des legierten Gusseisens, und wobei die Graphitstruktur eine Kugelgraphitstruktur und/oder eine Vermikulargraphitstruktur umfasst, und wobei eine oberflächengehärtete Schicht mit einer Dicke von 0,1 bis 2 mm auf dem legierten Gusseisen ausgebildet ist, und wobei das legierte Gusseisen der folgenden Korrelationsgleichung 1 genügt:

$$2 \leq H_S/H_I \leq 10$$

(hier bezeichnet Hs eine Vickers-Mikrohärte (HMV) der oberflächengehärteten Schicht des legierten Gusseisens, und $H_l$ bezeichnet eine Brinell-Härte (HB) einer inneren Schicht des legierten Gusseisens).

2. Legiertes Gusseisen nach Anspruch 1, wobei bei einer Querschnittsfläche des legierten Gusseisens ein Querschnittsflächenverhältnis der Perlitmatrix, der Graphitstruktur und der steatitartigen eutektischen Struktur 65 bis 85 : 10 bis 30 : 4 bis 7 beträgt.

3. Legiertes Gusseisen nach Anspruch 1, wobei die steatitartige eutektische Struktur ferner ein oder zwei oder mehr aus Phosphor (P), Kohlenstoff (C), Silicium (Si), Mangan (Mn), Magnesium (Mg), Schwefel (S), Nickel (Ni) und Zinn (Sn) ausgewählte Elemente umfasst.

4. Legiertes Gusseisen nach Anspruch 1, wobei die steatitartige eutektische Struktur eine Länge von 50 bis 100 $\mu$m in Richtung der Längsachse und eine Breite von 5 bis 30 $\mu$m hat.

5. Legiertes Gusseisen nach Anspruch 1, wobei die Kugelgraphitstruktur einen durchschnittlichen Teilchendurchmesser von 0,05 bis 0,15 $\mu$m hat und die Vermikulargraphitstruktur eine Länge von 50 bis 100 $\mu$m in Richtung der Längsachse und eine Breite von 5 bis 30 $\mu$m hat.

6. Kolbenring aus dem legierten Gusseisen nach einem der Ansprüche 1 bis 5.

7. Motor mit dem Kolbenring nach Anspruch 6.

8. Verfahren zur Herstellung eines legierten Gusseisens, wobei das Verfahren die folgenden Schritte umfasst:

   - Einspritzen eines geschmolzenen Metalls, das mindestens ein aus Bor (B) und Vanadium (V) ausgewähltes Element, mindestens ein aus Chrom (Cr) und Molybdän (Mo) ausgewähltes Element, Kupfer (Cu), Eisen (Fe) und Kohlenstoff (C) umfasst, in eine Form;
   - Abkühlen des in die Form eingespritzten geschmolzenen Metalls, um ein legiertes Gusseisen herzustellen, bei dem eine Graphitstruktur und eine steatitartige eutektische Struktur in einer Perlitmatrix ausgefällt sind; und
   - Durchführen einer Laser-Wärmebehandlung oder Hochfrequenz-Wärmebehandlung auf einer Oberfläche des legierten Gusseisens, um die Oberfläche des legierten Gusseisens zu härten,
   wobei das legierte Gusseisen 0,02 bis 0,5 Gew.-% von mindestens einem aus Bor (B) und Vanadium (V) ausgewählten Element, 0,1 bis 1,2 Gew.-% von mindestens einem aus Chrom (Cr) und Molybdän (Mo) ausgewählten Element, 0,3 bis 1 Gew.-% Kupfer (Cu), 0,02 bis 0,03 Gew.-% Phosphor (P), 3,2 bis 3,8 Gew.-% Kohlenstoff (C), 1,8 bis 2,8 Gew.-% Silicium (Si), 0,2 bis 1 Gew.-% Mangan (Mn), 0,005 bis 0,05 Gew.-% Magnesium (Mg), maximal 0,05 Gew.-% Schwefel (S), 0 bis 0,75 Gew.-% Nickel (Ni), 0 bis 0,1 Gew.-% Zinn (Sn) und als Rest Eisen (Fe) umfasst, bezogen auf ein Gesamtgewicht des legierten Gusseisens,
   wobei die Graphitstruktur eine Kugelgraphitstruktur und/oder eine Vermikulargraphitstruktur umfasst, und
   wobei eine oberflächengehärtete Schicht mit einer Dicke von 0,1 bis 2 mm auf dem legierten Gusseisen ausgebildet ist, und wobei das legierte Gusseisen der folgenden Korrelationsgleichung 1 genügt:

$$2 \leq H_S/H_l \leq 10$$

(hier bezeichnet $H_S$ eine Vickers-Mikrohärte (HMV) der oberflächengehärteten Schicht des legierten Gusseisens, und $H_l$ bezeichnet eine Brinell-Härte (HB) einer inneren Schicht des legierten Gusseisens).

## Revendications

1. Fonte alliée comprenant :

   une matrice de perlite ; et
   une structure de graphite et une structure eutectique de type stéatite, qui sont précipitées dans la matrice de perlite,
   dans laquelle la structure eutectique de type stéatite comprend au moins un élément choisi parmi le bore (B) et le vanadium (V), au moins un élément choisi parmi le chrome (Cr) et le molybdène (Mo), et du cuivre (Cu),

dans laquelle la fonte alliée comprend 0,02 à 0,5 % en poids d'au moins un élément choisi parmi le bore (B) et le vanadium (V), 0,1 à 1,2 % en poids d'au moins un élément choisi parmi le chrome (Cr) et le molybdène (Mo), 0,3 à 1 % en poids de cuivre (Cu), 0,02 à 0,03 % en poids de phosphore (P), 3,2 à 3,8 % en poids de carbone (C), 1,8 à 2,8 % en poids de silicium (Si), 0,2 à 1 % en poids de manganèse (Mn), 0,005 à 0,05 % en poids de magnésium (Mg), 0,05 % en poids de soufre (S) au maximum, 0 à 0,75 % en poids de nickel (Ni), 0 à 0,1 % en poids d'étain (Sn), et le reste étant fer (Fe), sur la base du poids total de la fonte alliée, et

dans laquelle la structure de graphite comprend une structure de graphite sphéroïdale et/ou une structure de graphite vermiculaire, et

dans laquelle une couche durcie en surface ayant une épaisseur de 0,1 à 2 mm est formée sur ladite fonte alliée, et la fonte alliée satisfait à l'équation de corrélation 1 suivante :

$$2 \leq H_S/H_l \leq 10$$

(ici Hs désigne une microdureté Vickers (HMV) de la couche durcie en surface de la fonte alliée, et $H_l$ désigne une dureté Brinell (HB) d'une couche interne de la fonte alliée).

2.  Fonte alliée selon la revendication 1, dans laquelle, dans une surface de section transversale de la fonte alliée, un rapport de la surface de section transversale de la matrice de perlite, de la structure de graphite et de la structure eutectique de type stéatite est de 65 à 85 : 10 à 30 : 4 à 7.

3.  Fonte alliée selon la revendication 1, dans laquelle la structure eutectique de type stéatite comprend en outre un ou deux éléments ou plus choisis parmi le phosphore (P), le carbone (C), le silicium (Si), le manganèse (Mn), le magnésium (Mg), le soufre (S), le nickel (Ni) et l'étain (Sn).

4.  Fonte alliée selon la revendication 1, dans laquelle la structure eutectique de type stéatite présente une longueur de 50 à 100 μm dans la direction de l'axe longitudinal et une largeur de 5 à 30 μm.

5.  Fonte alliée selon la revendication 1, dans laquelle la structure de graphite sphéroïdal présente un diamètre moyen de particules de 0,05 à 0,15 μm, et la structure de graphite vermiculaire présente une longueur de 50 à 100 μm dans la direction de l'axe longitudinal et une largeur de 5 à 30 μm.

6.  Segment de piston comprenant la fonte alliée selon l'une quelconque des revendications 1 à 5.

7.  Moteur comprenant le segment de piston selon la revendication 6.

8.  Procédé de fabrication d'une fonte alliée, le procédé comprenant les étapes suivantes :

    - injection d'un métal en fusion comprenant au moins un élément choisi parmi le bore (B) et le vanadium (V), au moins un élément choisi parmi le chrome (Cr) et le molybdène (Mo), le cuivre (Cu), le fer (Fe) et le carbone (C) dans un moule ;
    - refroidissement du métal en fusion injecté dans le moule pour produire une fonte alliée, dans laquelle une structure de graphite et une structure eutectique de type stéatite sont précipitées dans une matrice de perlite ; et
    - réalisation d'un traitement thermique au laser ou à haute fréquence sur une surface de la fonte alliée pour durcir la surface de la fonte alliée,
    dans laquelle la fonte alliée comprend 0,02 à 0,5 % en poids d'au moins un élément choisi parmi le bore (B) et le vanadium (V), 0,1 à 1,2 % en poids d'au moins un élément choisi parmi le chrome (Cr) et le molybdène (Mo), 0,3 à 1 % en poids de cuivre (Cu), 0,02 à 0,03 % en poids de phosphore (P), 3,2 à 3,8 % en poids de carbone (C), 1,8 à 2,8 % en poids de silicium (Si), 0,2 à 1 % en poids de manganèse (Mn), 0,005 à 0,05 % en poids de magnésium (Mg), 0,05 % en poids de soufre (S) au maximum, 0 à 0,75 % en poids de nickel (Ni), 0 à 0,1 % en poids d'étain (Sn), et le reste en fer (Fe), sur la base du poids total de la fonte alliée,
    dans laquelle la structure de graphite comprend une structure de graphite sphéroïdale et/ou une structure de graphite vermiculaire, et
    dans laquelle une couche durcie en surface ayant une épaisseur de 0,1 à 2 mm est formée sur ladite fonte alliée, et la fonte alliée satisfait à l'équation de corrélation 1 suivante :

$$2 \leq H_S/H_I \leq 10$$

(ici $H_S$ désigne une microdureté Vickers (HMV) de la couche durcie en surface de la fonte alliée, et $H_I$ désigne une dureté Brinell (HB) d'une couche interne de la fonte alliée).

【FIG. 1】

200    300

500

【FIG. 2】

400    300

500

200

**EP 3 428 486 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101292978
- JP 3218625 B
- WO 9410354 A1
- US 6485027 B1
- CN 86107845 A
- US 20150144230 A1